# EUROPEAN PATENT APPLICATION

(11) **EP 4 644 350 A1**
(43) Date of publication of application: **05.11.2025**
(21) Application number: 23910638.8
(22) Date of filing: 26.12.2023
(51) Int. Cl.: C04B 28/30, C04B 111/28

(54) **INORGANIC BIOMASS MATERIAL NON-COMBUSTIBLE BOARD AND PREPARATION METHOD THEREFOR**

(30) Priority: 27.12.2022 CN 202211686913
(71) Applicant: Jiangsu Jiashijia New Material Group Co., Ltd., Changzhou, Jiangsu 213000 (CN)
(72) Inventor: LIU, Jianwen, Changzhou, Jiangsu 213000 (CN); LUO, Qingyou, Changzhou, Jiangsu 213000 (CN); ZHU, Shengming, Changzhou, Jiangsu 213000 (CN)
(74) Representative: Musil, Dobroslav
(86) International application number: PCT/CN2023/142040
(87) International publication number: WO 2024/140715

(57) **Abstract**

Provided are an inorganic biomass material non-combustible board and a preparation method thereof, relating to the field of artificial boards. The method includes: mixing and stirring an inorganic binder component, water, and a stabilizer to obtain an inorganic adhesive; mixing and dispersing the inorganic adhesive with a biomass material and a modifier to obtain a mixed slurry; mixing the mixed slurry with an inorganic filler and additives to obtain a mixed raw material; spreading the mixed raw material into a mold to obtain a preformed product; curing and demolding the preformed product to obtain a green body; aging and drying the green body to obtain a semi-finished board; and cutting and sanding the semi-finished board to obtain the inorganic biomass material non-combustible board. Employing a composite process combining biomass materials with inorganic materials, the method enhances board toughness, reduces its brittleness, extends its service life, and broadens its application scope.

## Description

### TECHNICAL FIELD

The present disclosure relates to the technical field of artificial boards, and particularly to an inorganic biomass material non-combustible board and a preparation method thereof.

### BACKGROUND

Existing non-combustible boards made of inorganic materials, such as ceramic tiles, have a high specific gravity, high material brittleness, high hardness, and poor thermal insulation performance, resulting in low user comfort. The non-combustible boards made of glass fiber composite materials have a relatively lower specific gravity compared to ceramic tiles, but still remain relatively heavy. Due to the nature of glass fiber, skin irritation caused by fiber particles often occurs during processing. As China is a major agricultural country with abundant resources of biomass materials such as wood, bamboo, and straw, certain biomass materials have already been employed in the production of plant fiber boards and non-combustible boards. However, when the biomass materials are currently used as raw materials for manufacturing boards, as disclosed in Chinese Patent Publication No. CN107117927A, the process typically involves directly mixing the biomass raw materials with flame retardant components and binder components, followed by sequential operations such as spreading into molds, prepressing molding, shaping, and cold pressing to obtain final products. Boards prepared by such an operation process suffer from insufficient toughness and are prone to cracking during use, which limits the applicability of biomass material boards.

### SUMMARY

The technical problem to be solved by the present disclosure is to deal with insufficient toughness of the biomass material boards in the prior art. The present disclosure provides a preparation method of an inorganic biomass material non-combustible board. In the method, an inorganic binder component is pretreated prior to being mixed with the biomass raw materials to ensure that an mixed raw material can form a cement colloidal network structure, thereby improving the toughness of the product, reducing the brittleness, and solving the problem of insufficient toughness in biomass material boards found in the prior art.

The technical solution employed by the present disclosure to solve the technical problem is as follows: A preparation method of an inorganic biomass material non-combustible board, including the following steps: S1: mixing and stirring an inorganic binder component, water, and a stabilizer to obtain an inorganic adhesive; S2: mixing and dispersing the inorganic adhesive with a biomass material and a modifier to obtain a mixed slurry; S3: mixing the mixed slurry with an inorganic filler and additives to obtain a mixed raw material; S4:spreading the mixed raw material into a mold to obtain a preformed product; S5: curing and demolding the preformed product to obtain a green body; S6: aging and drying the green body to obtain a semi-finished board; and S7: cutting and sanding the semi-finished board to obtain the inorganic biomass material non-combustible board.

In some embodiments, in S1, the mass ratio of the inorganic binder component, the water, and the stabilizer is (20-40):(40-80):(0.3-0.5); in S2, the mass ratio of the inorganic adhesive, the biomass material, and the modifier is (40-60):(30-50):(0.5-1); and in S3, the mass ratio of the mixed slurry, the additives, and the inorganic filler is (40-80):(0.1-0.3):(20-60).

In some embodiments, the inorganic binder component includes magnesium oxide, magnesium hydroxide, and magnesium sulfate.

In some embodiments, the inorganic binder component further includes at least one of magnesium chloride, calcium sulfate, aluminum chloride, and sodium silicate.

In some embodiments, the stabilizer is an organic acid or an organic acid salt.

In some embodiments, the organic acid is selected from at least one of formic acid, acetic acid, and citric acid; and the organic acid salt is selected from at least one of formate, acetate, and citrate.

In some embodiments, the modifier is an organic modification component; and the organic modification component is selected from at least one of polyvinyl alcohol, polyvinyl formal, and polyvinyl butyral.

In some embodiments, the inorganic filler is selected from at least one of talcum powder, kaolin, stone powder, aluminum hydroxide, calcium carbonate, magnesium oxide, and magnesium hydroxide.

In some embodiments, the additives are a release agent, a leveling agent, and a defoamer; or the additives are a release agent, a leveling agent, and a foaming agent.

Another object of the present disclosure is to provide an inorganic biomass material non-combustible board prepared by the preparation method of the inorganic biomass material non-combustible board described above.

The present disclosure has the following beneficial effects: The preparation method of the inorganic biomass material non-combustible board provided by the present disclosure features a simple process and readily available raw materials. By employing a composite process combining biomass materials with inorganic materials, the prepared board exhibits significantly reduced specific gravity, greatly improved thermal insulation performance, and a wood-like texture similar to solid wood, thereby enhancing user comfort. Moreover, it helps to improve the toughness of the board, reduce its brittleness, extend its service life, and broaden its application scope.

### DETAILED DESCRIPTION OF THE EMBODIMENTS

The present disclosure will now be described in further detail. Embodiments described below are exemplary and are intended to illustrate the present disclosure, but should not be understood as limitations on the present disclosure. All other embodiments derived by a person of ordinary skill in the art based on the embodiments of the present disclosure without creative effort shall fall within the scope of protection of the present disclosure.

In order to solve the problem of insufficient toughness of biomass boards in the prior art, the present disclosure provides a preparation method of an inorganic biomass material non-combustible board, and the preparation method includes the following steps: S1: mixing and stirring an inorganic binder component, water, and a stabilizer to obtain an inorganic adhesive; S2: mixing and dispersing the inorganic adhesive with a biomass material and a modifier to obtain a mixed slurry; S3: mixing the mixed slurry with an inorganic filler and additives to obtain a mixed raw material; S4: spreading the mixed raw material into a mold to obtain a preformed product; S5: curing and demolding the preformed product to obtain a green body; S6: aging and drying the green body to obtain a semi-finished board; and S7: cutting and sanding the semi-finished board to obtain the inorganic biomass material non-combustible board.

Prior to mixing the inorganic binder component with the biomass material, the inorganic binder component is first mixed and stirred with water and a stabilizer until a cement colloidal network structure similar to a silicate is formed, thereby obtaining the inorganic adhesive; and the inorganic adhesive with a cement colloidal network structure is then mixed with the biomass material and the modifier. On the one hand, this facilitates thorough and uniform mixing of the inorganic adhesive with other components, improves the uniformity of the reaction, prevents flash coagulation, and ensures consistency in the material properties of final products; and this also contributes to enhanced stability and durability of the board's performance, allowing for long-term use without salt precipitation even under harsh conditions such as humidity. On the other hand, this helps to improve the toughness of the product, reduce its brittleness, prevent cracking during use, extend its service life, and broaden its application scope. Furthermore, the presence of the stabilizer assists in controlling the reaction rate, and adjusting cross-linking time and curing time, thereby enabling cold curing while ensuring preparation efficiency.

In addition, a preparation process provided by the present disclosure also helps to broaden the selection range of the biomass materials, reducing dependency on inherent properties such as water absorption of the biomass materials, that is, the biomass material can be selected in a wider range. While improving the performance of the inorganic biomass material non-combustible board, it also offers a feasible solution to straw disposal problems in rural areas, thereby enabling green production. Specifically, the biomass material in the present disclosure can be selected from at least one of wood, bamboo, straw, or other biomass materials. The biomass material can be incorporated into the system in the form of powder or short fibers, and preferably, the particle size of the powdered biomass material ranges from 20- to 100-mesh, and the size of the short fiber biomass material ranges from 1 to 3 mm.

Furthermore, in the present disclosure, S5 is preferably carried out by curing the preformed product at a temperature of 30-35°C and a relative humidity of 65%-80% for 48 hours, or at a temperature of 40-45°C and a relative humidity of 65%-80% for 24 hours; and S6 is preferably performed by aging and drying the green body at a temperature of 5-40°C and a relative humidity of 20%-50% for 7-14 days, or at a temperature of 40-65°C and a relative humidity of 10%-30% for 3-5 days.

The preparation method of the inorganic biomass material non-combustible board provided by the present disclosure features a simple process and readily available raw materials. By employing a composite process combining biomass materials with inorganic materials, the prepared board exhibits significantly reduced specific gravity, greatly improved thermal insulation performance, and a wood-like texture similar to solid wood, thereby enhancing user comfort. Moreover, it helps to improve the toughness of the board, reduce its brittleness, extend its service life, and broaden its application scope.

To balance preparation efficiency and product performance, the present disclosure preferably adopts the following mass ratios: in S1, the inorganic binder component, the water, and the stabilizer are in a mass ratio of (20-40):(40-80):(0.3-0.5); in S2, the inorganic adhesive, the biomass material, and the modifier are in a mass ratio of (40-60):(30-50):(0.5-1); and in S3, the mixed slurry, the additives, and the inorganic filler are in a mass ratio of (40-80):(0.1-0.3):(20-60).

The present disclosure preferably employs the inorganic binder component includes magnesium oxide, magnesium hydroxide, and magnesium sulfate, and preferably, the mass ratio of the magnesium oxide, the magnesium hydroxide, and the magnesium sulfate in the inorganic binder component is in the range of (3-5):(2-4):(2-3).

In addition, the inorganic binder component can further include at least one of magnesium chloride, calcium sulfate, aluminum chloride, and sodium silicate.

By employing the inorganic binder component provided by the present disclosure, the flame retardancy of the product can be enhanced without the need for additional flame retardant components, thereby obtaining a non-combustible board with excellent flame retardant performance while ensuring the mechanical properties of the product.

In the present disclosure, the stabilizer of the present disclosure is preferably selected from organic acids or organic acid salts. By specifically adjusting the type and amount of the stabilizer, the cross-linking and curing time of the system can be regulated. This ensures, on the one hand, that a material does not cure before paving, and ensures on the other hand, that the material cures promptly after spreading, thereby improving efficiency while ensuring product quality.

In the present disclosure, preferably, the organic acid is selected from at least one of formic acid, acetic acid, and citric acid; the organic acid salt is selected from at least one of formate, acetate, and citrate, and more preferably, the organic acid salt is a calcium salt or an ammonium salt.

In the present disclosure, the modifier is an organic modification component; and preferably, the organic modification component is selected from at least one of polyvinyl alcohol, polyvinyl formal, and polyvinyl butyral.

The introduction of the organic modification component into the modifier helps to further improve the toughness of the product and reduce its brittleness.

In the present disclosure, the inorganic filler is preferably selected from at least one of talcum powder, kaolin, stone powder, aluminum hydroxide, calcium carbonate, magnesium oxide, and magnesium hydroxide.

In the present disclosure, the additives are a release agent, a leveling agents, and a defoamer, and specifically, the mass ratio of the release agent, the leveling agent, and the defoamer is preferably (8-12):(5-8):(1-2); or, the additives are the release agent, the leveling agent, and a foaming agent, and specifically, the mass ratio of the release agent, the leveling agent, and the foaming agent is preferably (8-12):(3-5):(4-8). Specifically, when preparing high-density boards, the additives are the release agent, the leveling agent, and the defoamer; whereas preparing low-density boards, the additives are the release agent, the leveling agent, and the foaming agent.

Specifically, in the present disclosure, the release agent is preferably selected from polyoxyethylene ether-based or silicone-based release agents; the leveling agent is preferably selected from organic silicone-based or polyurethane-based leveling agents; the defoamer is preferably selected from organic silicone-based or mineral oil-based defoamers; and the foaming agent is preferably selected from inorganic or organic foaming agents.

Another object of the present disclosure is to provide the inorganic biomass material non-combustible board prepared by the preparation method of the inorganic biomass material non-combustible board described above.

The inorganic biomass material non-combustible board provided by the present disclosure employs the inorganic binder component, which, under the action of the stabilizer and the modifier, is compounded with the inorganic filler and the biomass material. After curing and aging processes, a solid product is formed, thus obtaining the non-combustible board with low specific gravity, excellent thermal insulation performance, high comfort, good toughness, and low brittleness, thereby extending the service life of the board while ensuring its performance.

In order to make the above objectives, features, and advantages of the present disclosure more apparent and easier to understand, the following provides a detailed description of specific embodiments of the present disclosure.

Unless otherwise specified, in each embodiment and comparative embodiment of the present disclosure, the release agent is methyl silicone oil; the leveling agent is organic silicon leveling agent BYK-333; the defoamer is BYK-022; and the foaming agent is aluminum carbonate.

### Embodiment 1

S1: mix 12 kg of magnesium oxide, 9 kg of magnesium hydroxide, 9 kg of magnesium sulfate, 49.7 kg of water, and 0.3 kg of citric acid, and stir for 1 hour to obtain an inorganic adhesive (theoretical weight: 80 kg); S2: mix and disperse the inorganic adhesive with 78.4 kg of straw particles (80-mesh) and 1.6 kg of polyvinyl alcohol to obtain a mixed slurry (theoretical weight: 160 kg); S3: mix the mixed slurry with 80 kg of kaolin (300-mesh) and 0.8 kg of additives to obtain a mixed raw material, where the additives include a release agent, a leveling agent, and a defoamer in a mass ratio of 10:6:1; S4: spread the mixed raw material into a mold to obtain a preformed product; S5: cure the preformed product at 35°C and 70% relative humidity for 48 hours, and then demold to obtain a green body; S6: age and dry the green body at 20°C and 30% relative humidity for 10 days to obtain a semi-finished board; and S7: cut and sand the semi-finished board to obtain the inorganic biomass material non-combustible board.

### Embodiment 2

S1: mix 20 kg of magnesium oxide, 12 kg of magnesium hydroxide, 8 kg of magnesium sulfate, 59.5 kg of water, and 0.5Kg of citric acid, and stir for 1 hour to obtain an inorganic adhesive (theoretical weight: 100 kg); S2: mix and disperse the inorganic adhesive with 78 kg of straw short fibers (with a size range of 1-2mm) and 2 kg of polyvinyl alcohol to obtain a mixed slurry (theoretical weight: 180 kg); S3: mix the mixed slurry with 180 kg of kaolin (300-mesh) and 0.9 kg of additives to obtain a mixed raw material, where the additives include a release agent, a leveling agent, and a defoamer in a mass ratio of 10:6:1; S4: spread the mixed raw material into a mold to obtain a preformed product; S5: cure the preformed product at 45°C and 70% relative humidity for 24 hours, and then demold to obtain a green body; S6: age and dry the green body at 55 °C and 30% relative humidity for 4 days to obtain a semi-finished board; and S7: cut and sand the semi-finished board to obtain the inorganic biomass material non-combustible board.

### Embodiment 3

S1: mix 12 kg of magnesium oxide, 9 kg of magnesium hydroxide, 9 kg of magnesium sulfate, 49.7 kg of water, and 0.3 kg of ammonium citrate, and stir for 1 hour to obtain an inorganic adhesive (theoretical weight: 80 kg); S2: mix and disperse the inorganic adhesive with 78.4 kg of wood particles (80-mesh) and 1.6 kg of polyvinyl alcohol to obtain a mixed slurry (theoretical weight: 160 kg); S3: mix the mixed slurry with 80 kg of kaolin (300-mesh) and 0.8 kg of additives to obtain a mixed raw material, where the additives include a release agent, a leveling agent, and a defoamer in a mass ratio of 10:6:1; S4: spread the mixed raw material into a mold to obtain a preformed product; S5: cure the preformed product at 35°C and 70% relative humidity for 48 hours, and then demold to obtain a green body; S6: age and dry the green body at 20 °C and 30% relative humidity for 10 days to obtain a semi-finished board; and S7: cut and sand the semi-finished board to obtain the inorganic biomass material non-combustible board.

### Embodiment 4

S1: mix 120 kg of magnesium oxide, 90 kg of magnesium hydroxide, 90 kg of magnesium sulfate, 600 kg of water, and 5 kg of citric acid, and stir for 1 hour to obtain an inorganic adhesive; S2: mix and disperse 500 kg of the inorganic adhesive with 500 kg of wood short fiber (with a size range of 1-2mm) and 10 kg of polyvinyl alcohol to obtain a mixed slurry; S3: mix 800 kg of the mixed slurry with 400 kg of kaolin (300-mesh) and 3 kg of additives to obtain a mixed raw material, where the additives include a release agent, a leveling agent, and a foaming agent in a mass ratio of 10:5:6; S4: spread the mixed raw material into a mold to obtain a preformed product; S5: cure the preformed product at 35°C and 70% relative humidity for 48 hours, and then demold to obtain a green body; S6: age and dry the green body at 20 °C and 30% relative humidity for 10 days to obtain a semi-finished board; and S7: cut and sanding the semi-finished board to obtain the inorganic biomass material non-combustible board.

### Embodiment 5

S1: mix 100 kg of magnesium oxide, 80 kg of magnesium hydroxide, 60 kg of magnesium sulfate, 60 kg of calcium sulfate, 650 kg of water, and 4 kg ammonium citrate, and stir for 1 hour to obtain an inorganic adhesive; S2: mix and disperse 500 kg of the inorganic adhesive with 300 kg of wood particles (80-mesh) and 5 kg of polyvinyl alcohol to obtain a mixed slurry; S3: mix 800 kg of the mixed slurry with 200 kg of kaolin (300-mesh) and 2 kg of additives to obtain a mixed raw material, where the additives include a release agent, a leveling agent, and a defoamer in a mass ratio of 10:6:1; S4: spread the mixed raw material into a mold to obtain a preformed product; S5: cure the preformed product at 35°C and 70% relative humidity for 48 hours, and then demold to obtain a green body; S6: age and dry the green body at 20 °C and 30% relative humidity for 10 days to obtain a semi-finished board; and S7: cut and sand the semi-finished board to obtain the inorganic biomass material non-combustible board.

### Comparative Embodiment 1

S1: mix 12 kg of magnesium oxide, 9 kg of magnesium hydroxide, 9 kg of magnesium sulfate, 49.7 kg of water, 0.3 kg of citric acid, 78.4 kg of straw particles (80-mesh), 1.6 kg of polyvinyl alcohol, 80 kg of kaolin (300-mesh), and 0.8 kg of additives, and stir for 1 hour to obtain a mixed raw material, where the additives include a release agent, a leveling agent, and a defoamer in a mass ratio of 10:6:1; S2: spread the mixed raw material into a mold to obtain a preformed product; S3: cure the preformed product at 35°C and 70% relative humidity for 48 hours, and then demold to obtain a green body; S4: age and dry the green body at 20 °C and 30% relative humidity for 10 days to obtain a semi-finished board; and S5: cut and sand the semi-finished board to obtain an inorganic biomass material non-combustible board.

### Comparative Embodiment 2

S1: mix 12 kg of magnesium oxide, 9 kg of magnesium hydroxide, 9 kg of magnesium sulfate, 49.7 kg of water, 0.3 kg of calcium citrate, 78.4 kg of wood particles (80-mesh), 1.6 kg of polyvinyl alcohol, 80 kg of kaolin (300-mesh), and 0.8 kg of additives, and stir for 1 hour to obtain a mixed raw material, where the additives include a release agent, a leveling agent, and a defoamer in a mass ratio of 10:6:1; S2: spread the mixed raw material into a mold to obtain a preformed product; S3: cure the preformed product at 35°C and 70% relative humidity for 48 hours, and then demold to obtain a green body; S4: age and dry the green body at 20 °C and 30% relative humidity for 10 days to obtain a semi-finished board; and S5: cut and sand the semi-finished board to obtain an inorganic biomass material non-combustible board.

### Comparative Embodiment 3

S1: mix 12 kg of magnesium oxide, 9 kg of magnesium hydroxide, 9 kg of magnesium sulfate, and 49.7 kg of water, and stir for 1 hour to obtain an inorganic adhesive; S2: mix and disperse the inorganic adhesive with 78.4 kg of wood particles (80-mesh) and 1.6 kg of polyvinyl alcohol to obtain a mixed slurry; S3: mix the mixed slurry with 80 kg of kaolin (300-mesh) and 0.8 kg of additives to obtain a mixed raw material, where the additives include a release agent, a leveling agent, and a defoamer in a mass ratio of 10:6:1; S4: spread the mixed raw material into a mold to obtain a preformed product; S5: cure the preformed product at 35°C and 70% relative humidity for 48 hours, and then demold to obtain a green body; S6: age and dry the green body at 20 °C and 30% relative humidity for 10 days to obtain a semi-finished board; and S7: cut and sand the semi-finished board to obtain the inorganic biomass material non-combustible board.

### Comparative Embodiment 4

S1: mix 12 kg of magnesium oxide, 9 kg of magnesium hydroxide, 9 kg of magnesium sulfate, 49.7 kg of water, and 0.3 kg of sodium citrate, and stir for 1 hour to obtain an inorganic adhesive; S2: mix and disperse the inorganic adhesive with 78.4 kg of wood particles (80-mesh) and 1.6 kg of polyvinyl alcohol to obtain a mixed slurry; S3: mix the mixed slurry with 80 kg of kaolin (300-mesh) and 0.8 kg of additives to obtain a mixed raw material, where the additives include a release agent, a leveling agent, and a defoamer in a mass ratio of 10:6:1; S4: spread the mixed raw material into a mold to obtain a preformed product; S5: cure the preformed product at 35°C and 70% relative humidity for 48 hours, and then demold to obtain a green body; S6: age and dry the green body at 20 °C and 30% relative humidity for 10 days to obtain a semi-finished board; and S7: cut and sand the semi-finished board to obtain the inorganic biomass material non-combustible board.

### Comparative Embodiment 5

S1: mix 12 kg of magnesium oxide, 9 kg of magnesium hydroxide, 9 kg of magnesium sulfate, 49.7 kg of water, and 0.3 kg of calcium citrate, and stir for 1 hour to obtain an inorganic adhesive; S2: mix and disperse the inorganic adhesive with 78.4 kg of wood particles (80-mesh) to obtain a mixed slurry; S3: mix the mixed slurry with 80 kg of kaolin (300-mesh) and 0.8 kg of additives to obtain a mixed raw material, where the additives include a release agent, a leveling agent, and a defoamer in a mass ratio of 10:6:1; S4: spread the mixed raw material into a mold to obtain a preformed product; S5: cure the preformed product at 35°C and 70% relative humidity for 48 hours, and then demold to obtain a green body; S6: age and dry the green body at 20 °C and 30% relative humidity for 10 days to obtain a semi-finished board; and S7: cut and sand the semi-finished board to obtain the inorganic biomass material non-combustible board.

The non-combustible boards prepared according to the above embodiments and comparative embodiments were subjected to performance testing, with the testing procedure as follows: flame retardancy: cut a test sample into 5cm*20 cm pieces; fix one end of the sample with a clamp for a length of 5cm, and designate the other 5 cm at the opposite end as a test area; adjust a blowtorch to produce a blue flame, and direct the flame at the test area for 20 seconds; remove the blowtorch, and observe the combustion state of the test area; and if the surface flame self-extinguishes upon removal of the blowtorch and no dense smoke is produced, the sample is considered to have passed the test; static bending strength: tested according to GB/T 17657-2013, experimental method 4.7; and a value of 10.0 MPa or above is considered qualified; elastic modulus: tested according to GB/T 17657-2013, experimental method 4.7; and a value of 5,000 Mpa or above is considered qualified; boiling water resistance: tested according to GB/T 17657-2013, experimental method 4.50; and a dimensional increase percentage of no more than 2% is considered qualified; thermal cycling resistance: tested according to GB/T 17657-2013, experimental method 4.37; and salting-out resistance: place the test sample measuring 20 cm*20 cm in a constant temperature chamber at 40°C and 95% relative humidity for 24 hours; dry the sample in an oven at 105°C for 4 hours; repeat the above two steps for 3 cycles; and then observe the sample surface under natural light, and If no salt stains or salt residue marks appear, the sample is considered qualified.

Test results are shown in Table 1:

**Table 1**

| Test Item | Flame-Retardant Performance | Static Bending Strength (MPa) | Elastic Modulus (MPa) | Resistance to Boiling Water (increase in size. %) | Resistance to Cold-Heat Cycles | Salting-out Resistance |
|---|---|---|---|---|---|---|
| Embodiment 1 | Pass | 10.5 | 5350 | 1.19% | Pass | Pass |
| Embodiment 2 | Pass | 14.7 | 7840 | 1.35% | Pass | Pass |
| Embodiment 3 | Pass | 11.3 | 5870 | 1.28% | Pass | Pass |
| Embodiment 4 | Pass | 17.8 | 7320 | 1.43% | Pass | Pass |
| Embodiment 5 | Pass | 10.3 | 5560 | 1.75% | Pass | Pass |
| Comparative Embodiment 1 | Fail | 5.4 | 2640 | 1.82% | Pass | Pass |
| Comparative Embodiment 2 | Fail | 8.7 | 3850 | 2.33% | Fail | Pass |
| Comparative Embodiment 3 | Fail | 1.2 | 1220 | 2.87% | Fail | Pass |
| Comparative Embodiment 4 | Pass | 10.7 | 5520 | 1.54% | Pass | Fail |
| Comparative Embodiment 5 | Pass | 0.3 | 850 | 1.12% | Pass | Pass |

From the data in the above table, it can be seen that the non-combustible boards prepared according to the embodiments of the present disclosure all exhibit excellent flame retardancy, high toughness, excellent weather resistance, and stable and long-lasting performance.

The raw material composition of Comparative Embodiment 1 is identical to that of Embodiment 1, but the preparation process differs, resulting in inferior flame retardancy and mechanical properties of the prepared non-combustible boards. The raw material composition of Comparative Embodiment 2 is identical to that of Embodiment 3, with the biomass materials all being wood particles, but the preparation process differs. As a result, the flame retardancy, mechanical properties, boiling water resistance, and thermal cycling resistance of the prepared non-combustible board are all degraded. The difference between Comparative Embodiment 3 and Embodiment 3 lies in the omission of the stabilizer calcium citrate, and then the non-combustible board prepared without calcium citrate shows significant deterioration in flame retardancy, mechanical properties, boiling water resistance, and thermal cycling resistance. The difference between Comparative Embodiment 4 and Embodiment 3 is that the stabilizer calcium citrate is replaced by sodium citrate. Although the prepared non-combustible board exhibits good flame retardancy, mechanical properties, boiling water resistance, and thermal cycling resistance, it salting-out resistance is poor. The difference between Comparative Embodiment 5 and Embodiment 3 is the absence of the modifier polyvinyl alcohol, and then the non-combustible board prepared shows significantly reduced mechanical properties.

Taking the above exemplary embodiments of the present disclosure as guidance, a person skilled in the art can make various changes and modifications based on the above description, without departing from the scope and spirit of the present disclosure. The technical scope of the present disclosure is not limited to the content disclosed in the specification, but must be determined in accordance with the scope of the claims.

## Claims

1. A preparation method of an inorganic biomass material non-combustible board, comprising following steps:
S1: mixing and stirring an inorganic binder component, water, and a stabilizer to obtain an inorganic adhesive;
S2: mixing and dispersing the inorganic adhesive with a biomass material and a modifier to obtain a mixed slurry;
S3: mixing the mixed slurry with an inorganic filler and additives to obtain a mixed raw material;
S4: spreading the mixed raw material into a mold to obtain a preformed product;
S5: curing and demolding the preformed product to obtain a green body;
S6: aging and drying the green body to obtain a semi-finished board; and
S7: cutting and sanding the semi-finished board to obtain the inorganic biomass material non-combustible board.

2. The preparation method of the inorganic biomass material non-combustible board according to claim 1, wherein, in S1, the mass ratio of the inorganic binder component, the water, and the stabilizer is (20-40):(40-80):(0.3-0.5); in S2, the mass ratio of the inorganic adhesive, the biomass material, and the modifier is (40-60):(30-50):(0.5-1); and in S3, the mass ratio of the mixed slurry, the additives, and the inorganic filler is (40-80):(0.1-0.3):(20-60).

3. The preparation method of the inorganic biomass material non-combustible board according to claim 2, wherein the inorganic binder component comprises magnesium oxide, magnesium hydroxide, and magnesium sulfate.

4. The preparation method of the inorganic biomass material non-combustible board according to claim 3, wherein the inorganic binder component further comprises at least one of magnesium chloride, calcium sulfate, aluminum chloride, and sodium silicate.

5. The preparation method of the inorganic biomass material non-combustible board according to claim 2, wherein the stabilizer is an organic acid or an organic acid salt.

6. The preparation method of the inorganic biomass material non-combustible board according to claim 5, wherein the organic acid is selected from at least one of formic acid, acetic acid, and citric acid; and the organic acid salt is selected from at least one of formate, acetate, and citrate.

7. The preparation method of the inorganic biomass material non-combustible board according to claim 2, wherein the modifier is an organic modification component, and the organic modification component is selected from at least one of polyvinyl alcohol, polyvinyl formal, and polyvinyl butyral.

8. The preparation method of the inorganic biomass material non-combustible board according to claim 2, wherein the inorganic filler is selected from at least one of talcum powder, kaolin, stone powder, aluminum hydroxide, calcium carbonate, magnesium oxide, and magnesium hydroxide.

9. The preparation method of the inorganic biomass material non-combustible board according to claim 2, wherein the additives are a release agent, a leveling agent, and a defoamer; or, the additives are the release agent, the leveling agent, and a foaming agent.

10. An inorganic biomass material non-combustible board, wherein it is prepared by the preparation method of the inorganic biomass material non-combustible board according to any one of claims 1 to 9.
